# EUROPEAN PATENT APPLICATION

(11) **EP 1 047 245 A2**
(43) Date of publication of application: **25.10.2000**
(21) Application number: 00660061.3
(22) Date of filing: 30.03.2000
(51) Int. Cl.: H04M 1/02

(54) **Portable communication device**

(30) Priority: 22.04.1999 FI 990910
(71) Applicant: Nokia Corporation, 00045 Espoo (FI)
(72) Inventor: Hantunen, Keijo, 33720 Tampere (FI)
(74) Representative: Johansson, Folke Anders

(57) **Abstract**

A portable communication device comprising a first part (2); a user interface element (4) on a surface of the first part (2); a second part (5) pivotably coupled to the first part (2). The second part (5) is pivotable to an open position wherein an opening angle (α) between the first (2) part and the second (5) part is over 180 degrees, and said opening angle (α) can be maintained at least when placed on a horizontal surface. The same structure that covers the user interface on one part of the device is pivotable to a position where it provides a stand for the device while the user interface is accessible to the user.

## Description

The present invention relates to telecommunications and in particular, though not necessarily, to a portable communication device.

Many different types of portable electronic devices are currently available which incorporate a user interface for conveying information to and from the user. Examples of such devices include cellular telephones and personal digital assistants (PDA). As the trend in telecommunications is towards a collaboration of different media types, e.g. voice, data and video, the use of such devices is also diversifying, and the importance of continuous access to one's personal user interface is increasing.

Voice communication can sometimes be considered disturbing and many situations exist, where use of audio communication means are prohibited or at least strongly disapproved. On the other hand, occasional glancing at a screen or operation of a device e.g. by touching is more easily accepted. To provide for such discrete access of telecom services, an arrangement for enabling for the device a standing position that offers easy access to the user interface is needed. Since a portable communication device is in question, the solution should be lightweight, and integrated into the device so that no extra appliances are required.

A prior art solution exists, where the lid that covers the body of the device is used for this purpose. Publication EP 932289 presents a telephone that comprises a housing with a plurality of coverable control keys at the front and a cover that can be moved between a closed position in which said control keys are covered and an open position in which said control keys are accessible for operation. If desired, the cover and the housing can include an angle of more than 180° so that the telephone can be put on a table or another flat surface in an upright position. In addition to being pivotable, the cover is movable parallel to the housing between the closed position and a moved intermediate position, from which intermediate position the cover can be pivoted to the open position.

Such an arrangement presents a good integrated structure where the cover provides protection to the control keys in the closed position and acts as a stand in the open position. If the lid is carried out as a slide, placing the slides on the sides of the device and positioning the cover under the device when in open position restricts the possibilities of use of the bottom and side parts of the device for connections or switches of the device. The mechanical structure of the cover and the slide is relatively complicated, involving an exact integration of the sliding and pivoting movements, and thus adding sensitivity to tolerances. Also the standing angle is restricted to a substantially vertical position. Friction associated with the sliding movement exposes the structure for wear, and implementation of the sliding movement typically requires both hands. In case of a flip solution the hinge ends up under great burden, because the main body leans the surface through the hinge. Durability of the hinge is under great jeopardy.

Now a communication device has been invented where the above noted problems of enabling the use of connectors in the bottom of the device and the strain in the hinge are obviated or at least mitigated. According to a first aspect of the present invention the portable communication device comprises a first part; a user interface element on a surface of the first part; a second part coupled to the first part and moveable about a hinged joint between open and closed positions in which at least part of the user interface element is respectively uncovered and covered by the second part; the second part is pivotable around one side of the communication device to an open position wherein an opening angle between the first part and the second part is over 180 degrees; and the device comprises support means for maintaining said opening angle between the first part and the second part at least when placed on a horizontal surface. The portable communication device according to the invention is characterised in that the second part comprises a covered region and an uncovered region for leaving said side uncovered when the second part is in the open position, and the second part has a bent form.

The invention is based on the idea that the same structure that covers the user interface on one part of the device is pivotable to a position where it provides a stand for the device while the user interface is accessible to the user. The device can be placed on a substantially horizontal surface and the access to the user interface is available without the user necessarily holding the device.

Embodiments of the present invention are arranged so that the second part will protect at least part of a user interface element on the first part of the device in the closed position and expose at least part of a user interface element in the open position. Such a user interface element may be e.g. a keyboard, a screen, a touchscreen or any combination of them. Preferable embodiment of the present invention is arranged so that the connectors situated at the bottom side of the device are uncovered and possible to use also when the lid is in open position. Also the main body of the device is preferably arranged to lean to the lid at the open position, thus not burdening the hinge by leaning to it and also enabling plainer structure of the hinge.

Preferably, said first part of the device comprises a body part of the communication device. The second part comprises preferably a lid or a flap that is hingeably coupled to the first part. Preferably, when the lid is in a closed position, the user interface element on the first part is not accessible or is only partly accessible to the user, and when the lid is in an open position, the user interface element is completely accessible to the user.

Preferably, the device is arranged to operate at least in two operating modes, and the position of the lid is associated with the operating mode of the device. One or more intermediate positions, optionally associated with further operating modes can also be arranged.

The communication device of the present invention preferably incorporates at least one of the following: a mobile phone, a mobile one-way or two-way communication pager, a wireless personal digital assistant and an wireless Internet/Intranet accessing device. For example, the device may be arranged to operate as a mobile phone, when the lid of the device is in the closed position. The device may additionally incorporate a Personal Digital Assistant (PDA) or a Personal Computer (PC) accessible to the user when the lid is open. The user interface exposed when the lid is opened provides a screen and/or a plurality of data input keys enabling a user to input data into the PDA or PC, or into a memory of the mobile phone.

For a better understanding of the present invention and in order to show how the same may be carried into effect reference will now be made, by a way of example, to the accompanying drawings in which:
Figures 1a-1d show an embodiment of a communication device according to the invention;
Figures 2a-2d show a preferable embodiment of the communication device according to the invention;
Figure 3 shows a support mechanism in the hinge structure;
Figures 4a-4c show a circuitry for controlling the operating mode; and
Figure 5a-5c show another embodiment of the communication device according to the invention.

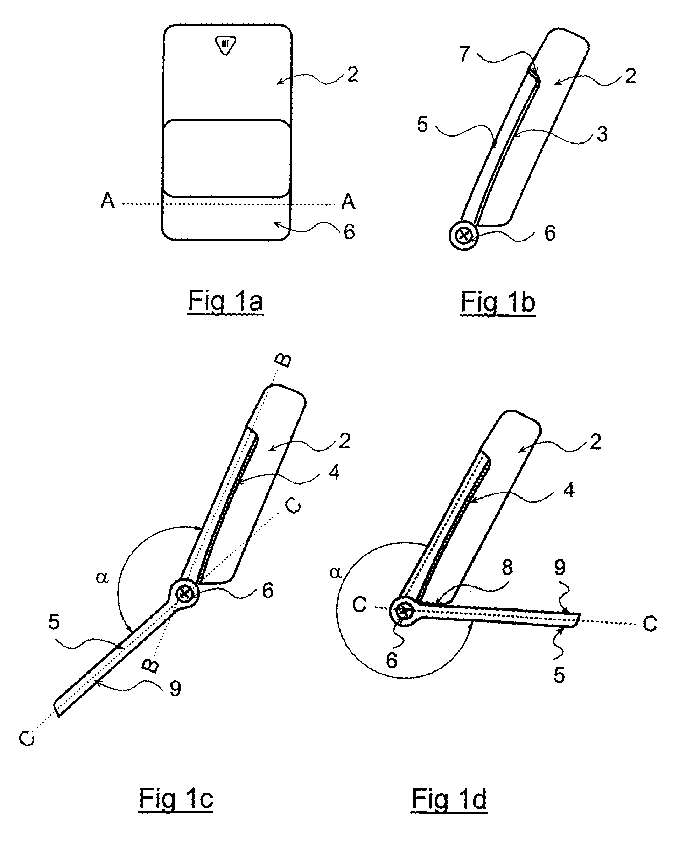

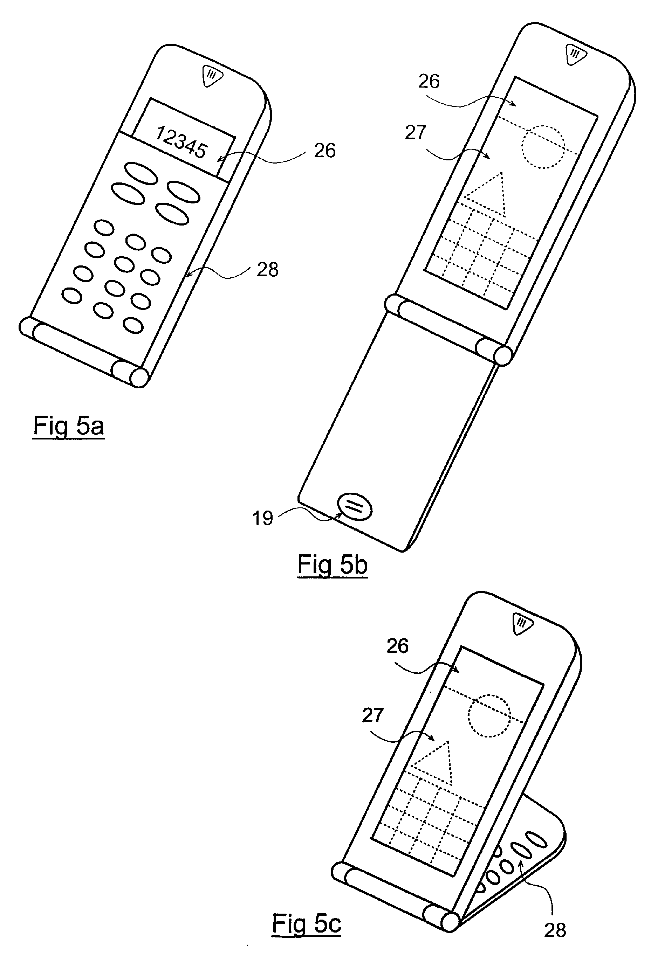

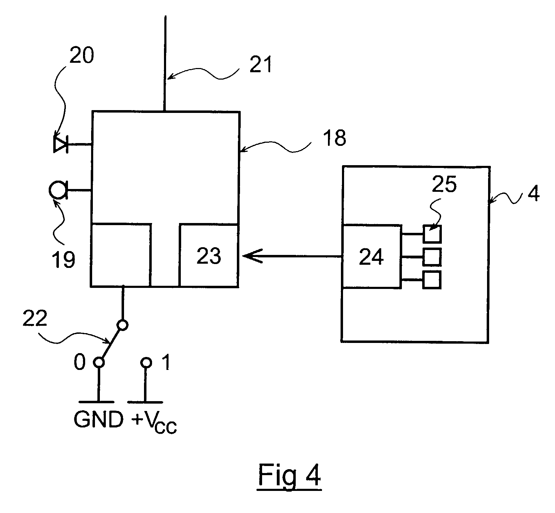

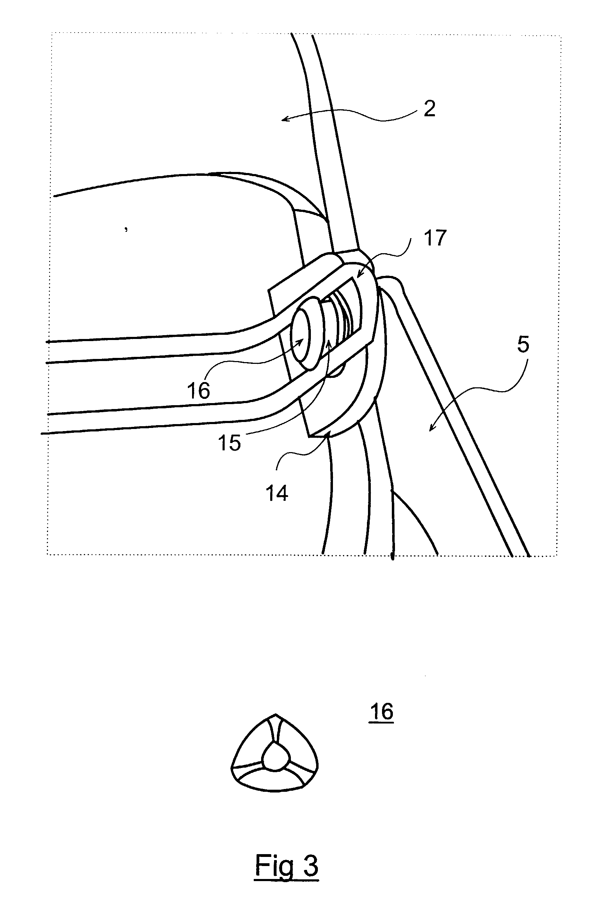

Figures 1 a-1 d show an embodiment of a communication device according to the invention. Figure 1 a shows the front perspective view of the device and Figure 1b-1d show the side perspective views of the device. Said communication device is arranged to provide a wireless link (e.g. radio frequency, infrared) to the communication network (e.g. mobile cellular, paging, wireless local area, Intranet, Internet) in a manner generally known to a person skilled in the art. In Figures 1 a and 1 b the device 1 is shown with the lid of the device in a closed position. The electronic device 1 comprises a main body 2, which houses most of the electronic circuitry for controlling the device 1 together with a power supply battery. A lid or a flap 5 is hingeably coupled to the body 2 by a hinge 6 such that the lid 5 can be pivoted about a hinge 6 axis AA which is preferably perpendicular to the longitudinal axes BB of the lid 5 and CC of the body 2. The lid 5 typically has a cross-sectional shape matching with the shape of the lower edge region of the body 2. The main body 2 is preferably provided with a recess 7 such that when the lid 5 is closed over the body 2 the outer surfaces of the body 2 and the lid 5 are flush with one another.

In Figures 1c and 1d the device 1 is shown with the lid of the device in open positions. On a front surface 3 of the body 2 there is provided a user interface element 4, e.g. a keyboard, a screen, a touchscreen or any combination of them. When the lid 5 is in the closed position, it covers at least part of the user interface element 4 and thus provides protection for the user interface element 4 against mechanical wearing and against impulses that can be misinterpreted as user commands. Protection against mechanical wearing is important especially when the user interface element 4 comprises sensitive components as a liquid crystal display or a touchschreen. Protection against unwanted external impulses is important especially when the user interface element 4 comprises a touchscreen wherein user commands are input by pressing certain areas of the touchscreen.

When the lid 5 is in the open position, the user interface element 4 is exposed and therefore accessible to the user. When opened, the lid 5 is pivotable to a position with an opening angle a over 180 degrees about an axis AA as shown in Figure 1c. A support mechanism 8 is provided to enable stopping of the rotational movement to an opening angle α between the lid and the body part. The support mechanism also allows the opening angle to be maintained when the device is put on a flat surface, e.g. on a table. The lid 5 will thus provide a stand for the body part 2 of the device 1, and the body part 2 will stand in a position where the user interface element 4 is easily visible and accessible to the user.

The support mechanism 8 shown in Figure 1 is provided by the structural form of the bottom surface of the body part 2 and the outer surface 9 of the lid. At a certain opening angle α the bottom surface of the body part 2 and the outer surface 9 of the lid are brought into contact with each other and as the lid is supported e.g. by a horizontal surface, the body part rests on the lid.

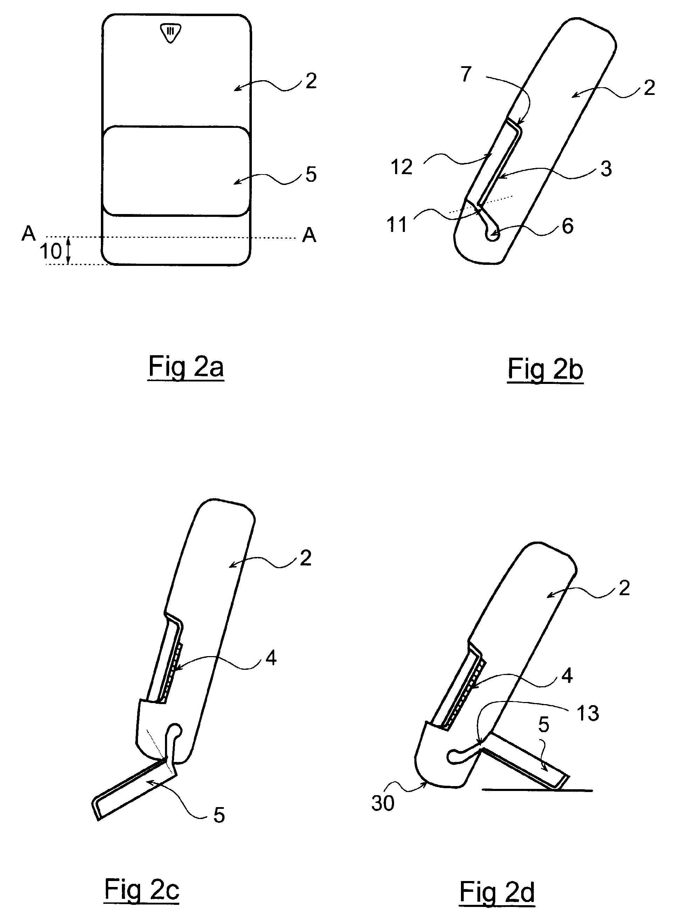

In Figures 2a-2d an alternative lid structure and thus an alternative support mechanism for the lid 5 and the body 2 is presented. Figure 2a shows the front perspective view of the device and Figures 2b-2d show the side perspective view of the device. In Figures 2a and 2b the device 1 is shown with the lid of the device in a closed position and in figures 2c and 2d the device 1 is shown with the lid of the device in open positions. The hinge 6 is preferably arranged so that the axis AA is at a distance 10 of the lower edge region of the body 2, although there is no obstacles with placing the hinge at the lower edge region. The lid 5 comprises an uncovered arm part 11 for extending the lid to a distance 10 from the hinge 6 for enabling the pivoting movement around the surface of the bottom part 30 of the body 2. The lid 5 also comprises a covered cover part 12 that is in the closed position arranged to cover the user interface element 4 and in the open position arranged to extend between a support level 13 in the body part 2 and the surface where the device is standing thereby acting as a stand for the device 1. The possibility for the lid to extend between the support level 13 and the surface is preferably achieved by connecting the uncovered arm part and the covered cover part of the lid in such a way that an angle less than 180° emerges between the lines going at the directions of the different parts, thus the lines through the different parts are not parallel. The stand function is preferably carried out so that the lid 5 at the open position gets into contact with the back surface of the body 2 and the lid 5 extends to the horizontal surface, enabling the body 2 to lean on the covered part 12 of the lid 5. An alternative way to carry out the stand function would be, for instance, by letting the body part 2 to lean through the hinge 6 by locking the hinge 6 at a certain position. By using referred to above kind of structure for the lid 5 the side 30 of the main body stays uncovered also when the lid 5 is in open position and thus it is possible to use connectors potentially situated at the side 30 also when the lid 5 is in open position. The main body 2 is preferably provided with a recess 7 in its surface such that when the lid 5 is closed over the body 2 the outer surfaces of the body 2 and the lid 5 are flush with one another.

Other alternative support mechanisms are also possible for the invented arrangement. In the embodiment shown in Figure 3, the support mechanism is incorporated into the hinge structure. The hinge comprises a pin 15, 16 extruding from the lid 5 and a plate with an aperture 14 fixed to the main body 2. The pin comprises a shaft 15 and a knob 16, and when pushed in the aperture is fastened to the main body 2 with a spring 17. The spring 17 is arranged to fasten around the shaft and against the knob 16 thereby preventing the pin from getting out of the aperture and still allowing rotational movement of the pin. The cross section of at least the shaft 15 is designed to stress the spring 17 differently in different points of the rotational movement, thus allowing the movement to be releasably stopped in certain mutual positions. As shown in Figure 3, for example a triangle shape with rounded corners will provide three positions where the movement of the lid 5 can be stopped. According to the design, the stopping mechanism can be arranged to lock the lid 5 and the body 2 also to more intermediate positions. Thereby the user can adjust the standing position of the device according to the supporting surface and/or personal preferences.

In a further embodiment of the invention the device is operable in at least two operating modes, one of them associated to the operation with the lid 5 in a closed position and one of them associated to the operation with the lid 5 in an open position. For example, when the lid 5 is in a closed position the user interface 4 is controlled to operate in a power saving mode where a set of user interface components e.g. backlights of the keys or a display are switched off, and when the lid is in an open position the user interface 4 is controlled to operate in a normal mode where said user interface components are switched on.

Circuitry for controlling the operating mode of the device 1 is shown in block diagram form in Figure 4. A microprocessor 18 of the circuitry performs a variety of functions including audio processing of signals received from the microphone 19, and transmission of audio signals to the loudspeaker 20, RF control via lines 21, and general data processing operations. However, as these are substantially conventional, only the role of the microprocessor in controlling the operating mode to follow the position of the lid will be described here.

The circuitry comprises a detection element 22, e.g. a mechanical switch incorporated in the hinge 6 for detecting the position of the lid 5. In the embodiment shown here, with the lid 7 in the closed position, the detection element 22 connects an interrupt of the microprocessor 18 to a logic low level (GND). With the lid 5 in the open position, the microprocessor interrupt is connected by the detection element 22 to a logic high level (+V_{cc}). Software controls the microcontroller to provide a mode controller 23, which receives the signal, placed on the microprocessor interrupt by the detection element 22. Software also causes the microprocessor 18 to provide a user interface controller 24 controlled by the mode controller 23. The user interface 4 is connected to the microprocessor 18 and functionally to the user interface controller 24.

With the lid 5 closed, the interrupt is set to logic low and the mode controller 23 controls the user interface controller 24 to deactivate the power feed to a set 25 of user interface components. When the lid 5 is opened, the interrupt is set to logic high and the mode controller controls the user interface controller 24 to activate the power feed to the set 25 of user interface components. The effect is that the operating mode of the user interface is responsive to the position of the lid. By using the invention with a detection element 22 capable of detecting more than two lid positions and increasing the modes of the user interface 4 and the controllers 23 and 24 correspondingly, adjustment to different operating conditions (e.g. in a pocket, held in a hand and on a table), can be implemented correspondingly.

The device illustrated in Figures 5a-5c presents an embodiment of the invention where the user interface 4 on the front surface 3 of the body 2 (later: first user interface) comprises a touchscreen programmably controlled by the user interface controller and operable in at least three different operating modes.

The first operating mode is associated with the lid 5 being in a closed position, as shown in Figure 4a. When the lid 5 is in the closed position, it leaves a first part 26 of the touchscreen visible to the user and covers the second part 27 of the touchscreen. On the outer surface of the lid there is a second user interface 28, which in this embodiment comprises a set of data entry keys. Said keys comprise a set of numeric keys and telephone dialling control keys including "off-hook", "on-hook", control keys and memory recall keys, collectively termed a "telephone keypad". It will be apparent that with the lid 5 in the closed position, the device has a configuration similar to that of a conventional cellular telephone and a user is able to control the making and receiving of the calls using the second user interface. In this operating mode the second part of the touchscreen can be operated in a power saving mode and the first part of the touchscreen can operate as a conventional display element, as described earlier.

The second operating mode is associated with the lid being in an intermediate position typically used when the user is holding the device in his hand and talking to the microphone 19. When the lid 5 is in the intermediate position as shown in Figure 5b, the first and the second parts of the touchscreen are accessible to the user, and the second user interface 24 is inaccessible. The touchscreen will provide a keyboard wherein key functions are activated by pressing certain areas on the touchscreen and the areas to press are shown by patterns displayed on the touchscreen. In this operating mode the second user interface 28 is operated in a power saving mode, and when necessary the touchscreen provides a conventional telephone keypad for operating the device as a cellular telephone, in addition to other means of data entry useful for accessing other wireless services with the device, e.g. PDA functionalities like scheduling, word processing, spreadsheet etc. The relatively large dimension of the touchscreen especially enhances the possibilities to access services based on visual output.

The third operating mode is associated with the lid being in a position where it provides a stand for the device and thus offers to the user a good visibility to the screen without employing his hands for holding the device in such a position.

When the lid is in a standing position as shown in Figure 5c, the first and the second parts of the touchscreen are accessible to the user, and the second user interface 24 is inaccessible. In this operating mode the second user interface 28 is operated in a power saving mode, and the touchscreen provides a conventional telephone keypad for operating the device as a cellular telephone. The touchscreen provides a conventional telephone keypad for operating the device as a cellular telephone, in addition to other means of data entry useful for accessing other wireless services with the device. In the third operating mode associated with the standing position the touchscreen is arranged to switch to a profiled mode. In the profiled mode the user is able to choose the profile of the user interface according to the situation, i.e. whether he is sitting in a meeting or at his desk.

It will be appreciated by a person skilled in the art that modifications may be made to the above described embodiment without departing from the scope of the present invention.

## Claims

1. A portable communication device (1) comprising:
a first part (2);
a user interface element (4) on a surface of the first part (2);
a second part (5) coupled to the first part (2) and moveable about a hinged joint (6) between open and closed positions in which at least part of the user interface element (4) is respectively uncovered and covered by the second part (5);
the second part (5) is pivotable around one side (30) of the communication device to an open position wherein an opening angle (a) between the first (2) part and the second (5) part is over 180 degrees; and
support means (8; 12, 13; 15, 16, 17) for maintaining said opening angle (α) between the first (2) part and the second (5) part at least when placed on a horizontal surface;
**characterised** in that
the second part (5) comprises a covered region (12) and an uncovered region (11) for leaving said side (30) uncovered when the second part (5) is in the open position, and the second part (5) has a bent form.

2. A device according to claim 1, **characterised** in that said bent form of the second part (5) is due to connecting the uncovered region (11) of the second part (5) and the covered region (12) of the second part (5) in such a way that an angle substantially less than 180° emerges in this connection point between the uncovered region (11) and the covered region (12).

3. A device according to claim 1, **characterised** in that said uncovered region (11) comprises arms for connecting said covered region (12) to said hinged joint, and the covered region (12) is arranged to cover the user interface element (4) when in closed position.

4. A device according to claim 1, **characterised** in that said support means (8; 12, 13; 15, 16, 17) comprises a configuration in which the second part (5) at a certain opening angle (α) is adjacent to a back surface of the first part (2) and the second part (5) extends to the horizontal surface, enabling the first part (2) to lean on the second part (5).

5. A device according to claim 1, **characterised** in that the hinged joint (6) is connected to the first part (2) at a distance (10) from the side (30) of the first part (2).

6. A device according to claim 1, further comprising at least one connector at the side (30) of the first part (2), **characterised** in that the connector is uncovered when the second part (5) is in the open position.

7. A device according to claim 1, **characterised** in that the second part (5) has a support surface located at an end opposite to the hinged joint and contact between the horizontal surface and the second part (5) occurs only at this support surface.

8. A device according to claim 1, **characterised** in that said support means (8; 12, 13; 15, 16, 17) comprise an arrangement wherein the hinged joint (6) is arranged to stop the movement in one or more stop points enabling the first part (2) to lean on the second part (5) when the device is placed on the horizontal surface.

9. A device according to claim 1, **characterised** in that the hinged joint (6) comprises a pin (15, 16), a spring (17) and a plane with an aperture (14), said pin comprising a shaft (15) and a knob (16) and being fastened against the plane (14) with a spring (17) that prevents the pin from getting out of the aperture and allows rotational movement of the pin.

10. A device according to claim 9, **characterised** in that the cross section of the shaft (15) is designed to stress the spring (17) differently in different points of the rotational movement.

11. A device according to claim 1, **characterised** in that the first part is a body portion (2) and the second part is a lid (5) of the device.

12. A device according to claim 1, **characterised** in that the device comprises
detection means (22) for detecting the position of the second part (5) in relation to the first part (2); and
mode control means (23), responsive to the detection means (22), and arranged to operate the device (1) in a first operating mode when the second part (5) is in the closed position, and in a second operating mode when the second part (5) is in the open position.

13. A device according to claim 12, **characterised** in that the device is arranged to provide a radio link to a mobile communication network, and in the first operating mode the device (1) is operable as a conventional mobile telephone.

14. A device according to any of the claims 1-13, **characterised** in that the user interface element (4) comprises a touchscreen.
